# EUROPÄISCHE PATENTSCHRIFT

(11) **EP 2 585 765 B1**
(45) Veröffentlichungstag und Bekanntmachung des Hinweises auf die Patenterteilung: **28.09.2016**
(21) Anmeldenummer: 11723093.8
(22) Anmeldetag: 07.06.2011
(51) Int. Cl.: F24D 3/08, F24D 11/00, F24D 10/00, F24D 17/00, F24D 19/10, G05D 23/19

(54) **SOLARANLAGE UND VERFAHREN ZUM BETREIBEN EINER SOLARANLAGE**
SOLAR INSTALLATION AND METHOD FOR OPERATING A SOLAR INSTALLATION
INSTALLATION SOLAIRE ET PROCÉDÉ PERMETTANT DE FAIRE FONCTIONNER UNE INSTALLATION SOLAIRE

(30) Priorität: 25.06.2010 DE 102010025115
(43) Veröffentlichungstag der Anmeldung: 01.05.2013
(73) Patentinhaber: Robert Bosch GmbH, 70442 Stuttgart (DE)
(72) Erfinder: WARZECHA, Andreas, 35460 Staufenberg (DE)
(86) Internationale Anmeldenummer: PCT/EP2011/059352
(87) Internationale Veröffentlichungsnummer: WO 2011/160941

(56) Entgegenhaltungen:
- EP-A1- 2 151 578
- EP-A2- 0 931 986
- DE-A1- 19 705 008
- DE-A1-102008 015 307
- US-A1- 2010 083 950

## Beschreibung

Die Erfindung betrifft eine Solaranlage und ein Verfahren zum Betreiben einer Solaranlage, insbesondere zur Warmwasserbereitung und/oder Heizungsunterstützung, nach dem Oberbegriff der Patentansprüche 1 und 2. Solch eine Solaranlage und solch ein Verfahren sind z.B. aus der US 2010/0083950 A1 bekannt.

Bekannt sind aus dem Stand der Technik solarthermische Großanlagen, welche mehrere Verbraucher wie zum Beispiel Wohnungsinstallationen in Mehrfamilienhäusern und dergleichen, mit Solarenergie versorgen. Derartige Großanlagen weisen mindestens ein Kollektorfeld auf, welches mit einer übergeordneten Regeleinrichtung als Kollektorfeldregler geregelt Solarenergie bereitstellt. Der Verbraucher weist einen Wärmespeicher, eine Frischwasserstation und/oder eine Übergabestation auf, beispielsweise für jeden Unterverbraucher, wie einer Wohnung in einem Mehrfamilienhaus.

Wahlweise erfolgt eine direkte Übergabe von solarer Energie aus dem Solarkreis über einen Plattenwärmetauscher oder über einen Pufferspeicher, welcher vom Solarkreis beheizt wird, an das zugeordnete Wärmeverteilnetz mit mindestens einer Pumpe. Die Lösung mit einem zentralen Pufferspeicher hat sich überwiegend durchgesetzt, um eine ausreichende Wärmespeicherkapazität in einer Anlage zu erhalten und auch zu überwachen.

Um die Abnahme durch die Wärmeverbraucher zu regeln, weist jeder Verbraucher eine lokale Regeleinrichtung auf, welche zusammen mit der übergeordneten Regeleinrichtung ein Regelsystem bildet. Die lokalen Regeleinrichtungen kommunizieren mit dem Kollektorfeldregler. Unter anderem werden zum Beispiel Verbraucherdaten wie ein Wärmebedarf übermittelt. Anhand der übermittelten Daten ermittelt der Kollektorfeldregler eine mögliche Wärmeabnahme des Verbrauchers mit dem entsprechenden Temperaturbedarf. Bisher orientierte man sich allerdings nur an Temperaturwerten, welche als Verbraucher-Sollwerte vorgegeben wurden oder als aktuelle verbraucherseitige Messwerte vorlagen. Ob ein Wärmeverbraucher eine Wärmespeicherkapazität aufwies, und wie groß diese ist, war bisher nicht relevant. Es konnte daher vorkommen, dass die Solaranlage bei hoher solarer Einstrahlung in einen Stagnationszustand wegen erreichter bzw. überschrittener Systemtemperaturen oder ausgeschöpfter Speicherkapazität im zentralen Pufferspeicher kam, obwohl eventuell im nachgeschalteten System mit den angeschlossenen Wärmeverbrauchern noch Speicherkapazitäten vorhanden wären.

Die US 2010/0083950 A1 offenbart eine Solaranlage, insbesondere zur Warmwasserbereitung und/oder Heizungsunterstützung, mit mehreren Solarkollektoren in mindestens einem Kollektorfeld.

Der Erfindung liegt die Aufgabe zugrunde, eine optimierte Solaranlage und ein optimiertes Verfahren zum Betreiben einer Solaranlage, für eine möglichst bedarfsgerechte und daher energieeffiziente Betriebsweise zu schaffen.

Erfindungsgemäß wird dies mit den Merkmalen des Patentanspruches 1 und 2 gelöst. Vorteilhafte Weiterbildungen sind den Unteransprüchen zu entnehmen.

Die erfindungsgemäße Solaranlage, insbesondere zur Warmwasserbereitung und/oder Heizungsunterstützung, mit mehreren Solarkollektoren in mindestens einem Kollektorfeld, wahlweise direkter Übergabe von solarer Energie über einen Plattenwärmetauscher oder über einen Pufferspeicher, mindestens zwei Wärmeverbrauchern mit jeweils einem Wärmespeicher, jeweils mit einer lokalen Regeleinrichtung zum Erfassen von Energiedaten der Wärmeverbraucher, mit einer übergeordneten Regeleinrichtung für das mindestens eine Kollektorfeld und ein Wärmeverteilnetz, welche mit den lokalen Regeleinrichtungen der Wärmeverbraucher vernetzt ist, wobei das Wärmeverteilnetz Verbindungsleitungen mit mindestens einer Pumpe für ein Wärmeträgermedium zum Verteilen der zur Verfügung stehenden Energiemenge an die Wärmeverbrauchen aufweist, wobei die lokalen Regeleinrichtungen mit der übergeordneten Regeleinrichtung über eine Kommunikationseinrichtung vernetzt sind, jeweils eine lokale Kennung aufweisen, und wobei an den lokalen Regeleinrichtungen der Wärmeverbraucher das Volumen des jeweils zugeordneten Wärmespeichers eingebbar ist, ist dadurch gekennzeichnet, dass die Solaranlage ausgebildet ist, den lokal eingegebenen Wert für das Volumen des jeweils zugeordneten Wärmespeichers an die übergeordnete Regeleinrichtung zu übergeben, wobei die übergeordnete Regeleinrichtung ausgebildet ist, sowohl Einzelvolumen, das sind die einzelnen Werte für die verbraucherseitigen Wärmespeichervolumina, als auch Gesamtvolumen, das ist die Gesamtsumme über die verbraucherseitigen Wärmespeichervolumina, auszuwerten und zu verarbeiten.

Das erfindungsgemäße Verfahren zum Betreiben einer Solaranlage, insbesondere zur Warmwasserbereitung und/oder Heizungsunterstützung, mit mehreren Solarkollektoren in mindestens einem Kollektorfeld, mindestens zwei Wärmeverbrauchern mit jeweils einem Wärmespeicher, mit einem Verbindungsleitungen aufweisenden Wärmeverteilnetz zum Verteilen der zur Verfügung stehenden Energiemenge an die Wärmeverbraucher mit mindestens einer Pumpe für ein Wärmeträgermedium, jeweils mit einer lokalen Regeleinrichtung zum Erfassen von Energiedaten der Wärmeverbraucher, mit einer übergeordneten Regeleinrichtung für das mindestens eine Kollektorfeld und das Wärmeverteilnetz, welche mit den lokalen Regeleinrichtungen der Wärmeverbraucher vernetzt ist, wobei die lokalen Regeleinrichtungen mit der übergeordneten Regeleinrichtung über eine Kommunikationseinrichtung vernetzt kommunizieren und jeweils eine lokale Kennung aufweisen, wobei an den lokalen Regeleinrichtungen der Wärmeverbraucher das Volumen des jeweils zugeordneten Wärmespeichers eingegeben wird, ist dadurch gekennzeichnet, dass der lokal eingegebene Wert für das Volumen des jeweils zugeordneten Wärmespeichers an die übergeordnete Regeleinrichtung übergeben wird, wobei die übergeordnete Regeleinrichtung sowohl Einzelvolumen, das sind die einzelnen Werte für die verbraucherseitigen Wärmespeichervolumina, als auch das Gesamtvolumen, das ist die Gesamtsumme über die verbraucherseitigen Wärmespeichervolumina, auswertet und verarbeitet.

Der jeweils lokal eingegebene Wert für das Volumen des jeweils zugeordneten Wärmespeichers wird an die übergeordnete Regeleinrichtung übergeben, wobei die übergeordnete Regeleinrichtung sowohl die Einzelvolumen als auch das Gesamtvolumen auswertet und verarbeitet. Somit stehen einzelne Werte für das verbraucherseitige Speichervolumen, aber auch eine Gesamtsumme, für die übergeordnete Regeleinrichtung zur Verfügung.

Weiterhin wertet die übergeordnete Regeleinrichtung die für Beladezustände der lokalen Wärmespeicher charakteristischen Temperaturen aus und verarbeitet diese.

Es stehen somit in der übergeordneten Regeleinrichtung Werte aus dem Kollektorfeld, aus dem Wärmeverteilnetz, mindestens der Temperaturen im Bereich der lokalen Wärmeverbraucher als Entnahmestellen, und/oder die jeweiligen Beladezustände der lokalen Wärmespeicher als Eingangsgrößen für eine Regelung zur Verfügung.

Damit steuert die übergeordnete Regeleinrichtung die mindestens eine Pumpe im Wärmeverteilnetz, wobei eine zum aktuellen Betriebszustand passende Betriebsart, eine optimale Pumpenleistung und/oder ein angepasster Volumenstrom ermittelt, eingestellt und/oder geregelt werden. In einer bevorzugten Ausführungsform ist daher die mindestens eine Pumpe im Wärmeverteilnetz eine modulierende betreibbare Pumpe, welche variabel über die übergeordnete Regeleinrichtung angesteuert wird. Daher wird die mindestens eine Pumpe im Wärmeverteilnetz vorzugsweise nach dem aktuellen Wärmebedarf der angeschlossenen Wärmeverbraucher betrieben.

Bei nicht vorhandenem Wärmebedarf der angeschlossenen Wärmeverbraucher werden die Temperaturen im Bereich der lokalen Wärmeverbraucher als Entnahmestellen überwacht und die mindestens eine Pumpe im Wärmeverteilnetz wird so betrieben, dass das Wärmeverteilnetz lediglich auf einer Bereitschaftstemperatur gehalten wird. Dazu wird jeweils ein Sollwert für die Temperatur im Bereich eines lokalen Wärmeverbrauchers mit einer einstellbaren Hysterese gewählt und mit der Temperatur des Solarkreises oder Pufferspeichers verglichen, wobei bei Unterschreitung des Einschaltwertes der Hysterese und einer gleichzeitig vorliegenden höheren Temperatur des Solarkreislaufs oder Pufferspeichers die mindestens eine Pumpe im Wärmeverteilnetz auf niedrigster Modulationsstufe so lange betrieben wird, bis alle Temperaturen im Bereich der lokalen Wärmeverbraucher wieder auf den Sollwert gebracht sind.

Dagegen bleibt die mindestens eine Pumpe im Wärmeverteilnetz abgeschaltet, solange mindestens ein Sollwert für die Temperatur im Bereich eines lokalen Wärmeverbrauchers höher als die aus dem Solarkreislauf oder dem Pufferspeicher zur Verfügung stehende Temperatur ist.

Mit dem erfindungsgemäßen Verfahren stehen eine optimierte Solaranlage und ein optimiertes Verfahren zum Betreiben einer Solaranlage, insbesondere zur Warmwasserbereitung und Heizungsunterstützung, zur Verfügung. Damit wird eine bedarfsgerechte und daher energieeffiziente Betriebsweise erreicht. Die Erfindung ist besonders für Solar-Großanlagen mit mehreren Verbrauchern geeignet. Dabei unterscheiden sich der Bedarf und auch das Wärmespeichervermögen der einzelnen Verbraucher in der Regel, so dass von einer heterogenen Verbraucherstruktur gesprochen wird. Auf die erfindungsgemäße Art kann die Energie zum Beispiel in einem Mehrfamilienhaus optimal und adaptiv verteilt werden. Als Gegen- bzw. Unterstation zur zentralen, übergeordneten Regeleinrichtung kann jede Wohnung beispielsweise einen Verbraucherregler erhalten, der die spezifischen Belange der Wohnung zur Integration der solaren Energie in die dezentrale Heizungsanlage und Warmwasserbereitung - also je nach Ausstattung dieser Funktionseinheit nur Warmwasserbereitung oder auch Warmwasserbereitung und Heizungsunterstützung - ermittelt und die Kommunikation zum übergeordneten Regeleinrichtung und zum Wohnungsregler übernimmt.

So kann auch erfindungsgemäß eine Verteilung der Wärmeenergie zu mindestens zwei Energieverbrauchern oder verbraucherseitigen Wärmespeichern mit dem Zweck durchgeführt werden, eine Stagnation der Solaranlage durch Dampfbildung im Kollektor zu verhindern. Dieser Fall tritt ein, wenn die Summe des Wärmebedarfs aller Verbraucher und/oder Wärmespeicher kleiner ist als die durch die Solaranlage zur Verfügung stehende Energiemenge. Es wird dabei dann versucht, möglichst viel Solarwärme in das Gesamtssystem einzubringen, um die Kollektortemperatur unterhalb der Stagnationsschwelle zu halten. Gleichzeitig wird dieser Betriebszustand, in dem quasi ein Überangebot an solarer Energie vorhanden ist, für die Durchführung einer thermischen Desinfektion der Verbindungsleitungen, der Energieverbraucher sowie der Energiespeicher genutzt. Entweder erfolgt dies parallel oder einzeln nacheinander. Ansonsten würden Anlagen gemäß dem Stand der Technik in einen Stagnations-Zustand gefahren. Es würden Kollektor und/oder Verbraucher jeweils Maximalbedingungen, zum Beispiel Maximaltemperaturen, erreichen. Die entsprechenden Anlagen müssten dann abgeschaltet werden und/oder eine Notkühlung würde aktiviert. Befinden sich die Kollektoren erst in einem Zustand mit Übertemperatur und Stagnation, so ist es nahezu unmöglich, die Anlage kurz nach Erreichen der Übertemperatur wieder anzufahren. Dies kann erst wieder erfolgen, wenn die Kollektoren ausgekühlt sind, zum Beispiel während der Nacht.

Weiterhin vorteilhaft ist der Verzicht auf einen zentralen Pufferspeicher, weil die Einzelvolumen sowie der aktuelle Beladungszustand der verbraucherseitigen Wärmespeicher erfindungsgemäß der übergeordneten Regeleinrichtung vorliegen.

Alternativ oder ergänzend dazu kann das Regelsystem auch auf andere Optimierungsfunktionen ausgelegt sein. Dies wäre erstens die solare Deckungsrate, nämlich indem angeschlossenen Wärmeverbraucher bzw. Wohneinheiten die zugesagte Energiemenge erhalten. Zweitens die Einsparung von fossiler Energie, insbesondere mit fossil befeuerten Zusatzwärmeerzeugern. Dabei soll das Heizgerät so wenig wie möglich starten bzw. betrieben werden.

Drittens die Überladung, nämlich die tägliche Aufheizung auf mindestens 60 °C, um eine thermische Desinfektion sicherzustellen. Diese Energie kann durch eine reversible Beladung, d. h. eine Entladung der Überkapazität, dem verbraucherseitigen Hydraulik-Netzwerk dann wieder zur Verfügung gestellt werden, wenn Bedarf besteht.

Als vierte Optimierungsfunktion ist es möglich, ein wohnungsspezifisches Nutzerverhalten zu ermitteln, um davon abhängig vorausschauend die jeweils zugeordneten Wärmespeicher zu beladen. Fünftens lassen sich die jeweiligen verbraucherspezifischen Heizmedium-Volumenströme einregeln und aufeinander abstimmen. Dadurch kann eine Solarenergie-Verteilung erreicht werden, welche proportional zu den einzelnen Speichervolumina sowie zu den Speicher-Ladezuständen ist.

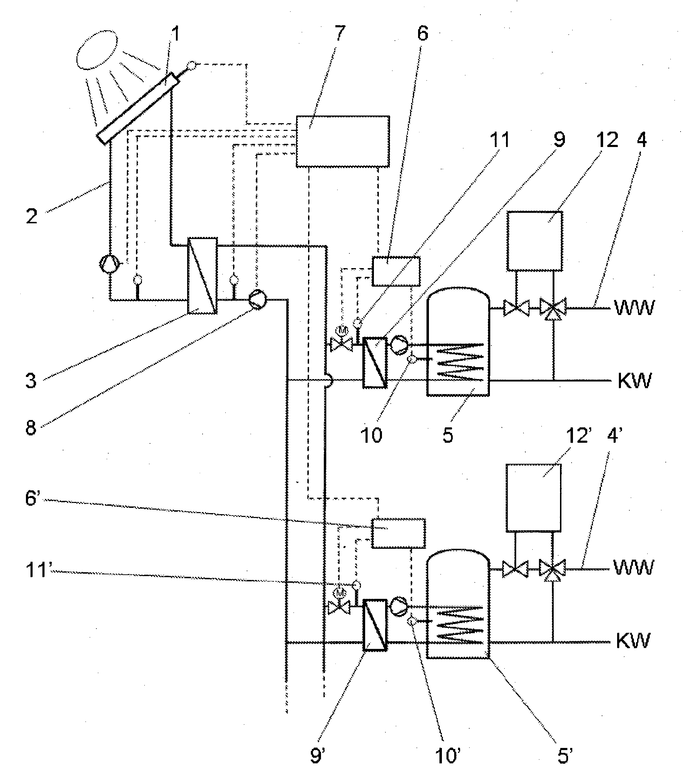

Die Zeichnung stellt ein Ausführungsbeispiel der Erfindung dar und zeigt in einer einzigen Figur schematisch eine Solaranlage bzw. ein Solarsystem zur Warmwasserbereitstellung an zwei schematisch dargestellten Verbrauchsstellen, wobei die Zahl der Verbrauchsstellen beliebig erweiterbar ist.

Die Solaranlage besteht im Wesentlichen aus mehreren Solarkollektoren in einem Kollektorfeld 1 mit direkter Übergabe von solarer Energie aus einem Solarkreislauf 2 über einen Plattenwärmetauscher 3.

Dargestellt sind zwei Wärmeverbraucher in Form von Warmwasserzapfstellen 4, 4' mit jeweils einem Wärmespeicher 5, 5', jeweils mit einer lokalen Regeleinrichtung 6, 6' zum Erfassen von Energiedaten der Wärmeverbraucher. Eine übergeordnete Regeleinrichtung 7 für das Kollektorfeld 1 und das Wärmeverteilnetz für ein Wärmeträgermedium mit Pumpe 8 ist mit den lokalen Regeleinrichtungen 6, 6' der Wärmeverbraucher vernetzt und bildet die Hauptregelung.

Eine lokale Regeleinrichtung 6, 6' dient jeweils zur Überwachung der Wärmeübergabe aus dem Wärmeverteilnetz an die jeweiligen Wärmeverbraucher über jeweils einen Plattenwärmetauscher 9, 9', welcher sekundärseitig jeweils einem Wärmespeicher 5, 5' zugeordnet ist. Dazu benutzt die Regeleinrichtung 6, 6' unter anderem auch einen Temperaturfühler 10, 10' für die Temperatur im Wärmespeicher 5, 5' sowie einen Temperaturfühler 11, 11' für die aus dem Wärmeverteilnetz primärseitig am Plattenwärmetauscher 9, 9' ankommende Vorlauftemperatur.

Die Leitung zur Warmwasserzapfstelle 4, 4' geht vom oberen Bereich des Wärmespeichers 5, 5' aus und ist über ein sogenanntes Backup-Heizgerät 12, 12' geführt, welches zur Warmwassererwärmung beiträgt, sobald aus dem solaren Wärmeverteilnetz zu wenig Energie eingetragen wird.

## Patentansprüche

1. Solaranlage, insbesondere zur Warmwasserbereitung und/oder Heizungsunterstützung, mit mehreren Solarkollektoren in mindestens einem Kollektorfeld (1), wahlweise direkter Übergabe von solarer Energie über einen Plattenwärmetauscher (3) oder über einen Pufferspeicher, mindestens zwei Wärmeverbrauchern mit jeweils einem Wärmespeicher (5, 5'), jeweils mit einer lokalen Regeleinrichtung (6, 6') zum Erfassen von Energiedaten der Wärmeverbraucher, mit einer übergeordneten Regeleinrichtung (7) für das mindestens eine Koflektorfeld (1) und ein Wärmeverteilnetz, welche mit den lokalen Regeleinrichtunggen (6, 6') der Wärmeverbraucher vernetzt ist, wobei das Wärmeverteilnetz Verbindungsleitungen mit mundestens einer Pumpe (8) für ein Wärmeträgermedium zum Verteilen der zur Verfügung stehenden Energiemenge an die Wärmeverbraucher aufweist,
wobei die lokalen Regeleinrichtungen (6, 6') mit der übergeordneten Regeleinrichtung (7) über eine Kommunikationaehnchtung vernetzt sind, jeweils eine lokale Kennung aufweisen, und wobei an den lokalen Regeleinrichtungen (6, 6') der Wärmeverbraucher das Volumen des jeweils zugeordneten Wärmespeiehers (5, 5') eingebbar ist.
**dadurch gekennzeichnet, dass** die Solaranlage ausgebildet ist, den lokal eingegebenen Wert für das Volumen des jeweils zugeordneten Wärmespeichers (5, 5') an die übergeordneten Regeleinrichtung (7) zu übergeben, wobei die übergeordnete Regeleinrichtung (7) ausgebildet ist, sowohl Einzelvolumen, das sind die einzelnen Werte für die verbraucherseitigen Wärmespeichervolumina, als auch Gesamtvolumen, das ist die Gesamtsumme über die verbraucherseitigen Wärmespeichervolumina, auszuwerten und zu verarbeiten.

2. Verfahren zum Betreiben einer Solaranlage, insbesondere zur Warmwasserbereitung und/oder Heizungsunterstützung, mit mehreren Solarkollektoren in mindestens einem Kollektorfeld (1), mindestens zwei Wärmeverbrauchern mit jeweils einem Wärmespeicher (5, 5'), mit einem Verbindungsleitungen aufweisenden Wärmeverteilnetz zum Verteilen der zur Verfügung stehenden Energiemenge an die Wärmeverbraucher mit mindestens einer Pumpe (8) für ein Wärmeträgermedium, jeweils mit einer lokalen Regeleinrichtung (6, 6') zum Erfassen von Energiedaten der Wärmeverbraucher, mit einer übergeordneten Regeleinrichtung (7) für das mindestens eine Kollektorfeld (1) und das Wärmeverteilnetz, welche mit den lokalen Regeleinrichtungen (6, 6') der Wärmeverbraucher vernetzt ist,
wobei die lokalen Regeleinrichtungen (6, 6') mit der übergeordneten Regeleinrichtung (7) über eine Kommunikationseinrichtung vernetzt kommunizieren und jeweils eine lokale Kennung aufweisen, wobei an den lokalen Regeleinrichtungen (6, 6') der Warmeverbraucher das Volumen des jeweils zugeordneten Wärmespeichers (5, 5') eingegeben wird,
**dadurch gekennzeichnet, dass** der lokal eingegebene Wert für das Volumen des jeweils zugeordneten Wärmespeichers (5, 5') an die übergeordnete Regeleinrichtung (7) übergeben wird, wobei die übergeordnete Regeleinrichtung (7) sowohl Einzelvolumen, das sind die einzelnen Werte für die verbrsucherseitigen Warmespeichervolumina, als auch das Gesamtvolumen, das ist die Gesamtsumme über die verbrauchersestigen Wärmespeichervolumina, auswertet und verarbeitet.

3. Verfahren nach Anspruch 2,
**dadurch gekennzeichnet, dass** die übergeordneten Regeleinrichtung (7) für die Beladezustände der lokalen Wärmespeicher (5, 5') charakteristische Temperaturen auswertet und verarbeitet.

4. Verfahren nach einem der Ansprüche 2 oder 3,
**dadurch gekennzeichnet, dass** die übergeordneten Regeleinrichtung (7) Werte aus dem Kollektorfeld (1), aus dem Wärmeverteilnetz, mindestens der Temperaturen im Bereich der lokalen Wärmeverbraucher als Entnahmesteilen, und/oder die jeweiligen Beladezustände der lokalen Wärmespeicher (5, 5') auswertet und verarbeitet.

5. Verfahren nach einem der Ansprüche 2 bis 4,
**dadurch gekennzeichnet, dass** die übergeordnete Regeleinrichtung (7) die mindestens eine Pumpe (8) im Wärmeveneilnetz steuert, wobei eine zum aktuellen Betriebszustand passende Betriebsart Pumpenleistung und/oder ein Volumenstrom ermittelt, eingestellt und/oder geregelt werden.

6. Verfahren nach einem der Ansprüche 2 bis 5,
**dadurch gekennzeichnet, dass** die mindestens eine Pumpe (8) im Wärmeverteilnetz modulierend betrieben wird, wobei die Pumpe variabel über die übergeordnete Regeleinrichtung (7) angesteuert wird.

7. Verfahren nach einem der Ansprüche 2 bis 6,
**dadurch gekennzeichnet, dass** die mindestens eine Pumpe (8) im Wärmeverteilnetz nach dem aktuellen Wärmebedarf der angeschlossenen Wärmeverbraucher betrieben wird.

8. Verfahren nach einem der Ansprüche 2 bis 7,
**dadurch gekennzeichnet, dass** bei nicht vorhandenem Wärmebedarf der angeschlossenen Wärmeverbraucher die Temperaturen im Bereich der lokalen Wärmeverbraucher als Entnahmestellen überwacht werden und die mindestens eine Pumpe (8) im Wärmeverteilnetz so betrieben wird, dass das Wärmeverteilnetz auf einer Bereitschaftstemperatur gehalten wird, indem jeweils ein Sollwert für die Temperatur im Bereich eines lokalen Wärmeverbrauchers mit einer einstellbaren Hysterese gewählt und mit der Temperatur des Solarkreislaufes (2) oder Pufferspeichers verglichen wird, wobei bei Unterschreitung des Einschallwertes der Hysterese und einer höheren Temperatur des Solarkreises (2) oder Pufferspeichers die mindestens eine Pumpe (8) im Wärmeverteilnetz auf niedrigster Modulationsstufe so lange betrieben wird, bis alle Temperaturen im Bereich der lokalen Wärmeverbraucher wieder auf dem Sollwert sind.

9. Verfahren nach einem der Ansprüche 2 bis 8,
**dadurch gekennzeichnet, dass** die mindestens eine Pumpe (8) im Wärmeverteilnetz abgeschaltet bleibt, solange mindestens ein Sollwert für die Temperatur im Bereich eines lokalen Wärmeverbrauchers höher als die aus dem Solarkreislauf (2) oder dem Pufferspeicher zur Verfügung stehende Temperatur ist.

## Claims

1. Solar installation, in particular for water heating and/or heating assistance, having a plurality of solar collectors in at least one collector array (1), optionally direct transfer of solar energy via a plate heat exchanger (3) or via a buffer store, at least two heat consumers with in each case one heat accumulator (5, 5'), in each case with a local regulating device (6, 6') for detecting energy data of the heat consumers, with a superordinate regulating device (7) for the at least one collector array (1) and a heat distribution network, which superordinate regulating device (7) is linked to the local regulating devices (6, 6') of the heat consumers, the heat distribution network having connecting lines with at least one pump (8) for a heat exchange medium for distributing the available energy quantity to the heat consumers, the local regulating devices (6, 6') being linked to the superordinate regulating device (7) via a communications device, in each case having a local identifier, and it being possible for the volume of the respectively associated heat accumulator (5, 5') to be input at the local regulating devices (6, 6') of the heat consumers, **characterized in that** the solar installation is configured to transfer the locally input value for the volume of the respectively associated heat accumulator (5, 5') to the superordinate regulating device (7), the superordinate regulating device (7) being configured to evaluate and to process both individual volume (that is to say, the individual values for the consumer-side heat accumulator volumes) and overall volume (that is to say, the total sum of the consumer-side heat accumulator volumes).

2. Method for operating a solar installation, in particular for water heating and/or heating assistance, having a plurality of solar collectors in at least one collector array (1), at least two heat consumers with in each case one heat accumulator (5, 5'), having a heat distribution network which has connecting lines for distributing the available energy quantity to the heat consumers with at least one pump (8) for a heat exchange medium, in each case with a local regulating device (6, 6') for detecting energy data of the heat consumers, with a superordinate regulating device (7) for the at least one collector array (1) and the heat distribution network, which superordinate regulating device (7) is linked to the local regulating devices (6, 6') of the heat consumers, the local regulating devices (6, 6') communicating with the superordinate regulating device (7) in a manner which is linked via a communications device and in each case having a local identifier, the volume of the respectively associated heat accumulator (5, 5') being input at the local regulating devices (6, 6') of the heat consumers, **characterized in that** the locally input value for the volume of the respectively associated heat accumulator (5, 5') is transferred to the superordinate regulating device (7), the superordinate regulating device (7) evaluating and processing both individual volume (that is to say, the individual values for the consumer-side heat accumulator volumes) and overall volume (that is to say, the total sum of the consumer-side heat accumulator volumes).

3. Method according to Claim 2, **characterized in that** the superordinate regulating device (7) evaluates and processes characteristic temperatures for the load states of the local heat accumulators (5, 5').

4. Method according to either of Claims 2 and 3, **characterized in that** the superordinate regulating device (7) evaluates and processes values from the collector array (1), from the heat distribution network, at least the temperatures in the region of the local heat consumers as removal points, and/or the respective load states of the local heat accumulators (5, 5').

5. Method according to one of Claims 2 to 4, **characterized in that** the superordinate regulating device (7) controls the at least one pump (8) in the heat distribution network, an operating mode, pump output and/or a volumetric flow which suit/suits the current operating state being determined, set and/or regulated.

6. Method according to one of Claims 2 to 5, **characterized in that** the at least one pump (8) is operated in a modulating manner in the heat distribution network, the pump being actuated in a variable manner via the superordinate regulating device (7).

7. Method according to one of Claims 2 to 6, **characterized in that** the at least one pump (8) is operated in the heat distribution network according to the current heat requirement of the connected heat consumers.

8. Method according to one of Claims 2 to 7, **characterized in that**, if there is no heat requirement of the connected heat consumers, the temperatures in the region of the local heat consumers are monitored as removal points and the at least one pump (8) is operated in the heat distribution network in such a way that the heat distribution network is kept at a standby temperature, by in each case one setpoint value for the temperature in the region of a local heat consumer being selected with an adjustable hysteresis and being compared with the temperature of the solar circuit (2) or buffer store, the at least one pump (8) being operated in the heat distribution network at the lowest modulation stage if the switch-on value of the hysteresis is undershot and in the case of a higher temperature of the solar circuit (2) or buffer store, until all temperatures in the region of the local heat consumers are at the setpoint value again.

9. Method according to one of Claims 2 to 8, **characterized in that** the at least one pump (8) remains switched off in the heat distribution network until at least one setpoint value for the temperature in the region of a local heat consumer is higher than the available temperature from the solar circuit (2) or the buffer store.

## Revendications

1. Installation solaire, en particulier pour la préparation d'eau chaude et/ou l'appoint de chauffage, avec plusieurs collecteurs solaires dans au moins un champ de collecteurs (1), un transfert direct sélectif d'énergie solaire par le biais d'un échangeur de chaleur à plaques (3) ou par le biais d'un accumulateur tampon, au moins deux consommateurs de chaleur ayant chacun un accumulateur de chaleur (5, 5'), avec à chaque fois un dispositif de réglage local (6, 6') pour détecter des données énergétiques des consommateurs de chaleur, avec un dispositif de réglage supérieur (7) pour l'au moins un champ de collecteurs (1) et un réseau de distribution de chaleur qui est branché avec les dispositifs de réglage locaux (6, 6') des consommateurs de chaleur, le réseau de distribution de chaleur présentant des conduites de raccordement à au moins une pompe (8) pour un fluide caloporteur pour distribuer la quantité d'énergie disponible aux consommateurs de chaleur,
les dispositifs de réglage locaux (6, 6') étant branchés avec le dispositif de réglage supérieur (7) par le biais d'un dispositif de communication, présentant chacun une identification locale, et le volume de l'accumulateur de chaleur respectivement associé (5, 5') pouvant être entré au niveau des dispositifs de réglage locaux (6, 6') des consommateurs de chaleur,
**caractérisé en ce que** l'installation solaire est réalisée pour transférer la valeur entrée localement pour le volume de l'accumulateur de chaleur respectivement associé (5, 5') au dispositif de réglage supérieur (7), le dispositif de réglage supérieur (7) étant réalisé pour analyser et traiter les volumes individuels, c'est-à-dire les valeurs individuelles des volumes des accumulateurs de chaleur du côté des consommateurs, ainsi que les volumes totaux, c'est-à-dire la somme totale des volumes des accumulateurs de chaleur du côté des consommateurs.

2. Procédé pour faire fonctionner une installation solaire, en particulier pour la préparation d'eau chaude et/ou l'appoint de chauffage, avec plusieurs collecteurs solaires dans au moins un champ de collecteurs (1), au moins deux consommateurs de chaleur ayant à chaque fois un accumulateur de chaleur (5, 5'), avec un réseau de distribution de chaleur présentant des conduites de raccordement pour la distribution de la quantité d'énergie disponible aux consommateurs de chaleur avec au moins une pompe (8) pour un fluide caloporteur, à chaque fois avec un dispositif de réglage local (6, 6') pour détecter des données énergétiques des consommateurs de chaleur, avec un dispositif de réglage supérieur (7) pour l'au moins un champ de collecteurs (1) et le réseau de distribution de chaleur, lequel est branché avec les dispositifs de réglage locaux (6, 6') des consommateurs de chaleur,
les dispositifs de réglage locaux (6, 6') communiquant, par branchement par le biais d'un dispositif de communication, avec le dispositif de réglage supérieur (7) et présentant à chaque fois une identification locale, le volume de l'accumulateur de chaleur respectivement associé (5, 5') étant entré au niveau des dispositifs de réglage locaux (6, 6') des consommateurs de chaleur,
**caractérisé en ce que** la valeur entrée localement du volume de l'accumulateur de chaleur respectivement associé (5, 5') est transférée au dispositif de réglage supérieur (7), le dispositif de réglage supérieur (7) analysant et traitant les volumes individuels, c'est-à-dire les valeurs individuelles des volumes des accumulateurs de chaleur du côté des consommateurs, ainsi que les volumes totaux, c'est-à-dire la somme totale des volumes des accumulateurs de chaleur du côté des consommateurs.

3. Procédé selon la revendication 2,
**caractérisé en ce que** le dispositif de réglage supérieur (7) analyse et traite des températures caractéristiques pour les états de chargement des accumulateurs de chaleur locaux (5, 5').

4. Procédé selon l'une quelconque des revendications 2 ou 3,
**caractérisé en ce que** le dispositif de réglage supérieur (7) analyse et traite des valeurs provenant du champ de collecteurs (1), du réseau de distribution de chaleur, au moins des températures dans la région des consommateurs de chaleur locaux en tant que points de prélèvement, et/ou les états de chargement respectifs des accumulateurs de chaleur locaux (5, 5').

5. Procédé selon l'une quelconque des revendications 2 à 4,
**caractérisé en ce que** le dispositif de réglage supérieur (7) commande l'au moins une pompe (8) dans le réseau de distribution de chaleur, un mode de fonctionnement adapté à l'état de fonctionnement actuel, la puissance de la pompe et/ou un débit volumique étant déterminés, ajustés et/ou réglés.

6. Procédé selon l'une quelconque des revendications 2 à 5,
**caractérisé en ce que** l'au moins une pompe (8) dans le réseau de distribution de chaleur fonctionne avec modulation, la pompe étant commandée de manière variable par le biais du dispositif de réglage supérieur (7).

7. Procédé selon l'une quelconque des revendications 2 à 6,
**caractérisé en ce que** l'au moins une pompe (8) dans le réseau de distribution de chaleur fonctionne en fonction du besoin actuel de chaleur des consommateurs de chaleur raccordés.

8. Procédé selon l'une quelconque des revendications 2 à 7, **caractérisé en ce qu'**en l'absence d'un besoin de chaleur des consommateurs de chaleur raccordés, les températures dans la région des consommateurs de chaleurs locaux sont contrôlées en tant que points de prélèvement et l'au moins une pompe (8) dans le réseau de distribution de chaleur est entraînée de telle sorte que le réseau de distribution de chaleur soit maintenu à une température de disponibilité, une valeur de consigne pour la température étant à chaque fois sélectionnée dans la région d'un consommateur de chaleur local avec une hystérésis ajustable, et étant comparée à la température du circuit solaire (2) ou de l'accumulateur tampon, et si cette température descend en dessous de la valeur de mise en circuit de l'hystérésis et d'une température plus élevée du circuit solaire (2) ou de l'accumulateur tampon, l'au moins une pompe (8) dans le réseau de distribution de chaleur est mise en fonctionnement à un étage de modulation le plus bas jusqu'à ce que toutes les températures dans la plage des consommateurs de chaleur locaux soient à nouveau à la valeur de consigne.

9. Procédé selon l'une quelconque des revendications 2 à 8, **caractérisé en ce que** l'au moins une pompe (8) dans le réseau de distribution de chaleur reste déconnectée tant qu'au moins une valeur de consigne pour la température dans la plage d'un consommateur de chaleur local est supérieure à la température disponible à partir du circuit solaire (2) ou de l'accumulateur tampon.
